# EUROPÄISCHE PATENTSCHRIFT

(11) **EP 3 092 885 B1**
(45) Veröffentlichungstag und Bekanntmachung des Hinweises auf die Patenterteilung: **03.06.2020**
(21) Anmeldenummer: 16001065.8
(22) Anmeldetag: 11.05.2016
(51) Int. Cl.: A01D 34/66, A01D 34/73, A01D 34/82

(54) **MÄHMASCHINE**
MOWING MACHINE
FAUCHEUSE

(30) Priorität: 15.05.2015 DE 102015006065
(43) Veröffentlichungstag der Anmeldung: 16.11.2016
(73) Patentinhaber: Maschinenfabrik Bernard Krone GmbH & Co. KG, 48480 Spelle (DE)
(72) Erfinder: Horstmann, Josef, 49479 Ibbenbüren (DE); Afting, Andreas, 48488 Emsbüren (DE); Lömker, Jens, 48496 Hopsten (DE)

(56) Entgegenhaltungen:
- EP-A1- 0 763 319
- WO-A1-86/03932
- DE-U1- 20 108 505
- US-A- 5 768 865
- US-A1- 2013 111 863

## Beschreibung

Die Erfindung betrifft eine Mähmaschine zum Mähen von landwirtschaftlichem Halm- und Blattgut nach dem Oberbegriff des Patentanspruchs 1. Solche Mähmaschinen sind aus dem Stand der Technik in vielfältigen Ausführungsformen bekannt und dienen dazu, das auf einer Feld- oder Wiesenfläche stehende, landwirtschaftliche Halm- und Blattgut abzuschneiden, um es danach in einer für den weiteren Ernteprozess erforderlichen Schwadform oder zur Unterstützung einer verbesserten Trocknung des Erntegutes in einer gleichmäßigen Schicht auf der gesamten Arbeitsbreite abzulegen. Dazu ist die Mähmaschine mit Schneidorganen ausgestattet, die mit einer hohen Umfangsgeschwindigkeit um eine in etwa vertikale Achse umlaufend angetrieben sind. Dabei schneiden zumindest zwei den Schneidorganen zugeordnete Schneidmesser das Gras oder dgl. Halm- oder Blattgut ab und fördern dieses in einer der Fahrt- und Arbeitsrichtung entgegen gerichteten Richtung ab, so dass das Erntegut entweder hinter den Schneidorganen in einem Schwad abgelegt werden kann oder vor der Ablage noch eine Aufbereitungseinrichtung durchläuft, um den Trocknungsprozess zu beschleunigen. Beim praktischen Einsatz derartiger Mähmaschinen hat sich jedoch gezeigt, dass es Einsatzbedingungen gibt, unter denen die Schneidorgane das Halm- oder Blattgut nicht sauber abschneiden, so dass auf der Feld- oder Wiesenfläche Streifen verbleiben, in denen das Halm- oder Blattgut nur unzureichend abgeschnitten ist. Aus praktischen Untersuchungen zu diesem Problem hat man heraus gefunden, dass bei einer paarweisen Abstimmung der Antriebsdrehrichtung der Schneidorgane die Schneidorgane, deren Umlaufrichtung in Fahrt- und Arbeitsrichtung gerichtet ist, eine Luftströmung erzeugt wird, welche beim Mähprozess das Halm- oder Blattgut von den Schneidorganen wegdrückt und somit einen optimalen Mähprozess deutlich behindert. Dieser Mangel wird noch dadurch verstärkt, dass die Schneidorgane beim Mähprozess mit einer hohen Umfangsgeschwindigkeit umlaufen.

Aus der DE 201 08 505 U1 ist ein Kreiselmäher bekannt geworden, bei dem an einem Maschinengestell gelagerte Mähteller für den Mähprozess eingesetzt werden. Zur Lösung des Problems mit der in Fahrt- und Arbeitsrichtung gerichteten Luftströmung wird vorgeschlagen, an der Unterseite der Mähteller Luftförderelemente anzubringen, die so gestaltet sind, dass eine radial nach innen gerichtete Luftströmung entsteht und der dabei erzeugte Luftstrom durch Durchlassöffnungen im Mähteller von der Unterseite des Mähtellers an seine Oberseite gelangen kann. Eine Abstellung des Mangels der auf das noch stehende Halm- und Blattgut gerichteten Luftströmung beim Mähbetrieb ist damit jedoch noch nicht erreicht, da die Mähteller auch an ihrer Oberseite zum Aufbau von Luftströmungen geeignet sind.

Aufgabe der Erfindung ist es daher, eine Mähmaschine zum Mähen von landwirtschaftlichem Halm- und Blattgut bereitzustellen, bei der die bekannten Mängel aus dem Stand der Technik zuverlässig vermieden sind und damit unter den zahlreichen unterschiedlichen Einsatzbedingungen ein sauberes Schnittbild erzielbar ist.

Diese Aufgabe wird erfindungsgemäß durch eine Mähmaschine mit den Merkmalen des Patentanspruchs 1 gelöst, wobei die Merkmale der weiteren Patentansprüche die Lösung in vorteilhafter Weise weiterentwickeln.

Die Erfindung schlägt somit eine Mähmaschine zum Mähen von landwirtschaftlichem Halm- oder Blattgut vor, bei der der Mäherbaugruppe eine aktive Absaugungseinheit zugeordnet ist. Diese Absaugungseinheit ist dazu eingerichtet, Luftströmungen, die unterhalb einer die Mäherbaugruppe zumindest teilweise umgebenden Schutz- und Abdeckungsbaugruppe vorherrschen und in Richtung auf das abzumähende Halm- oder Blattgut gerichtet sind, in eine Richtung umzulenken, in der das abzumähende Halm- oder Blattgut nicht mehr durch die Luftströmung beaufschlagt ist. Diese erfindungsgemäße Umlenkung der Luftströmung hat in vorteilhafter Weise zur Folge, dass das abzumähende Halm- oder Blattgut beim Abmähen nicht mehr in Fahrt- und Arbeitsrichtung weg- bzw. umgedrückt wird. Als Resultat eines solchen Erntevorganges entsteht beim Abmähen des landwirtschaftlichen Halm- oder Blattgutes eine Feld- oder Wiesenfläche mit gleich langen, auf der Feld- oder Wiesenfläche verbleibenden Stoppeln.

Die Umlenkung der Luftströmung vollzieht sich dabei dadurch, dass die der Mäherbau-gruppe zugeordnete Absaugungseinheit eine hinreichend große Luftmenge aus einem Bereich absaugt, der sich oberhalb der als Rotationskörper ausgebildeten Schneidorgane erstreckt und bis an eine die Mäherbaugruppe zumindest teilweise umgebende Schutz- und Abdeckungsbaugruppe heranreicht. Aus Sicherheitsgründen ist es beim Einsatz von Mähmaschinen, bei denen die Schneidwirkung durch eine Vielzahl von mit hohen Umfangsgeschwindigkeiten umlaufenden Schneidorgangen mit radial nach außen stehenden Schneidmessern im freien Schnitt erzeugt wird, zwingend notwendig, dass die Mäherbaugruppe mit den umlaufend angetriebenen Schneidorganen zumindest von der Oberseite her mit einer Schutz- und Abdeckungsbaugruppe umgeben ist. Dieses kann eine etwa kastenförmig gestaltete Blechabdeckung und/oder eine Schutztuchanordnungen sein, die im Hinblick auf eine hinreichende Schutzwirkung gegen eventuell umherfliegende Steine oder dgl. Fremdkörper beim Mähvorgang aber auch eine Umgebung der Mäherbaugruppe schafft, aus der beispielsweise durch die umlaufend angetriebenen Schneidorgane verursachte Luftströmungen nicht ohne geeignete technische

Hilfsmittel abgeführt werden können. Ein solches Hilfsmittel stellt die Absaugungseinheit dar, die der Mäherbaugruppe zugeordnet ist und sich gleichermaßen zur Verwendung in einer Mähmaschine mit auf einem bodenseitigen Mähholm gelagerten Mähtellern als Schneidorgane als auch zur Verwendung an einem sogenannten Kreisel- oder Trommelmäher eignet. Die beispielsweise von den rotierend angetriebenen Schneidorganen oder von einer den Schneidorganen nachgeschalteten Aufbereitungseinheit verursachten Luftströmungen können dabei durch die Wirkung der Absaugungseinheit so umgelenkt und auf direkten Weg in einen Bereich abgeführt werden, der außerhalb von der Schutz- und Abdeckungsbaugruppe gelegen ist. In einer vorteilhaften Ausführungsform kann es ebenso auch vorgesehen sein, dass die aus dem Umgebungsbereich der Mäherbau-gruppe abgeführte Luftströmung in einen Bereich hinter einer, zumindest eine Bearbeitungswalze aufweisenden Aufbereitungseinrichtung abgeführt wird, um beispielsweise dort den sich an den Erntevorgang anschließenden Ablageprozess des Halm- oder Blattgutes zu unterstützen.

Die Erfindung geht davon aus, dass die Absaugungseinheit zumindest einem der Schneidorgane der Mäherbaugruppe zugeordnet ist. Dazu ist es vorgesehen, dass sich oberhalb eines bodennahen Rotationskörpers des Schneidorganes eine Förder- und Leittrommel für das abgemähte Halm- oder Blattgut anschließt. Durch die Verwendung einer solchen Förder- und Leitrommel wird es dann ermöglicht, dass sich oberhalb der Förder- und Leittrommel eine als Ventilator- oder Gebläseeinheit mit radialer Strömungsrichtung ausgebildete Absaugungseinheit anschliesst. In vorteilhafter Weise wird damit die Antriebsenergie der mit einer hohen Umfangsgeschwindigkeit angetriebenen Schneidorgane genutzt, um eine hinreichend große Luftmenge aus dem Umgebungsbereich der Mäherbaugruppe abzusaugen, so dass dadurch eine zuverlässige Umlenklung der auf das noch abzumähende Halm- und Blattgut gerichteten Luftströmungen erreicht wird. Die Absaugung einer hinreichend großen Luftmenge aus dem Umgebungsbereich der Schneidorgane der Mäherbaugruppe beeinflusst das Strömungs- und Druckniveau in dem unterhalb der Schutz- und Abdeckungsbaugruppe gelegenen und als relativ dicht abgeschottet anzusehenden Bereich in entscheidender Weise, so dass dadurch eine wirkungsvolle Umlenkung der nachteiligen Luftströmungen hervorgerufen wird.

Um eine hinreichend große Luftmenge aus dem Umgebungsbereich der Mäherbaugruppe absaugen zu können, kann es notwendig sein, sogar mehreren Schneidorganen eine als Ventilator- oder Gebläseeinheit mit radialer Strömungsrichtung ausgebildete Absaugungseinheit zu zuordnen. Weiterhin kann es dabei vorgesehen sein, dass die von einer als Ventilator- oder Gebläseeinheit ausgebildeten Absaugungseinheit zu fördernde Luftmenge einstellbar ausgebildet ist. In konstruktiver Hinsicht kann eine als Ventilator- oder Gebläseeinheit mit radialer Strömungsrichtung ausgebildete und zumindest einem Schneidorgan zugeordnete Absaugungseinheit so gestaltet sein, dass ein mit Förderelementen versehener Ventilator- oder Gebläserotor an der Oberseite der Förder- und Leittrommel eines oder mehrerer Schneidorgane angebracht ist und mit einem Ventilator- oder Gebläsegehäuse umgeben ist. Das Ventilator- oder Gebläsegehäuse ist dabei vorzugsweise an einer Rahmenbaugruppe oder an der Schutz- und Abdeckungsbaugruppe der Mähmaschine gehaltert.

Gemäß den bisherigen Ausführungen ist die Erfindung anhand einer als Ventilator- oder Gebläseeinheit mit radialer Strömungsrichtung ausgebildeten Absaugungseinheit beschrieben. Die Erfindung ist jedoch in keinster Weise nur auf diese Art von Ventilator- und Gebläseeinheiten beschränkt. Vielmehr kann der Erfindung auch ebenso eine Ventilator- oder Gebläseeinheit mit axialer Strömungsrichtung zugrunde gelegt sein. Weiterhin kann es auch sein, dass eine weitere mögliche Ausführungsform einer Ventilator- oder Gebläseeinheit zumindest einen in seiner Längserstreckung horizontal quer zur Fahrt- und Arbeitsrichtung sich erstreckenden Gebläserotor aufweist, der sich hinsichtlich seiner Länge über mehrere Schneidorgane der Mähbaugruppe ausdehnt. Hierbei könnte sich eine gleichmäßigere Absaugung eine hinreichend großen Luftmenge aus dem Umgebungsbereich der Mäherbaugruppe im Hinblick auf die gesamte Mähbreite der Mähmaschine ergeben. Im Rahmen einer Weiterbildung der Erfindung kann es vorgesehen sein, dass eine oder mehrere Bearbeitungswalzen einer den Schneidorganen nachgeordneten Aufbereitungseinrichtung von einem Leitblech zumindest teilweise umschlossen sind. Das Leitblech ist dazu so ausgestaltet, dass die von der oder den Bearbeitungswalzen eingebrachten Luftströmungen umgekehrt werden und somit nach dem Venturi-Prinzip eine hinreichend große Luftmenge aus dem Umgebungsbereich der Mäherbaugruppe abgesaugt wird.

Des Weiteren ist es vorstellbar, dass an einer Mähmaschine zum Mähen von landwirtschaftlichem Halm- oder Blattgut mit zumindest zwei, um eine in etwa vertikal ausgerichtete Achse umlaufend angetriebenen Schneidorganen, die zumindest einen, in der Arbeits- und Betriebsstellung bodennahen, an seiner Außenperipherie mit zumindest zwei Schneidmesser versehenen Rotationskörper aufweisen und in etwa quer zur Fahrt- und Arbeitsrichtung an einer Mäherbaugruppe gelagert sind, wobei die Mäherbaugruppe in der Arbeits- und Betriebsstellung über eine Rahmenbaugruppe auf dem Erdboden abgestützt ist und zumindest teilweise von einer Schutz- und Abdeckungsbaugruppe umgeben ist, eine der Mäherbaugruppe in Bezug zur Fahrt- und Arbeitsrichtung nachgeordnete Aufbereitungseinrichtung angebracht ist, bei der zumindest eine der Bearbeitungswalzen der Aufbereitungseinrichtung zumindest teilweise mit einem Abdeckblech umhüllt ist. Aus der Praxis weiß man, dass die Bearbeitungswalzen einer Aufbereitungseinrichtung im Erntebetrieb auch Luftströmungen verursachen, die in Richtung auf das noch abzumähende Halm- und Blattgut gerichtet sind und somit einen Einfluss auf die Schnittqualität ausüben. In konstruktiver Hinsicht werden die den Bearbeitungswalzen zugeordneten Abdeckbleche so gestaltet, dass die Bearbeitungswalzen weniger Luft fördern. Das bedeutet, dass die Abdeckbleche möglichst dicht an die Oberfläche der Bearbeitungswalzen herangerückt angebracht werden müssen, um ihre Funktion erfüllen zu können. Weiterhin ist es vorgesehen, dass die Abdeckbleche den Bearbeitungswalzen so zugeordnet sind, dass Höhenbewegungen der Bearbeitungswalzen, die aufgrund von einem unterschiedlich dicken Erntegutstrom auftreten, auch von den Abdeckblechen synchron mit den Bearbeitungswalzen durchlaufen werden können.

Nachfolgend wird ein vorteilhaftes Ausführungsbeispiel der Erfindung anhand einer Zeichnung beschrieben. In der Zeichnung zeigt:
- Fig. 1:: eine perspektivische Ansicht einer Mähmaschine nach der Erfindung, bei der die in Fahrt- und Arbeitsrichtung zeigende Maschinenseite teilweise abgebrochen dargestellt ist;
- Fig. 2:: eine schematische Darstellung einer Mäherbaugruppe der Mähmaschine nach Fig. 1, in der eine Übersicht unterschiedlicher Luftströmungen aufgezeigt ist;
- Fig. 3:: eine vergrößerte, abgebrochen dargestellte, perspektivische Ansicht der Mähmaschine nach Fig. 1;
- Fig. 4:: eine Seitenansicht auf eine Mähmaschine nach Fig. 1, bei der das in Fahrt- und Arbeitsrichtung linke Schneidorgan im Schnitt dargestellt ist;

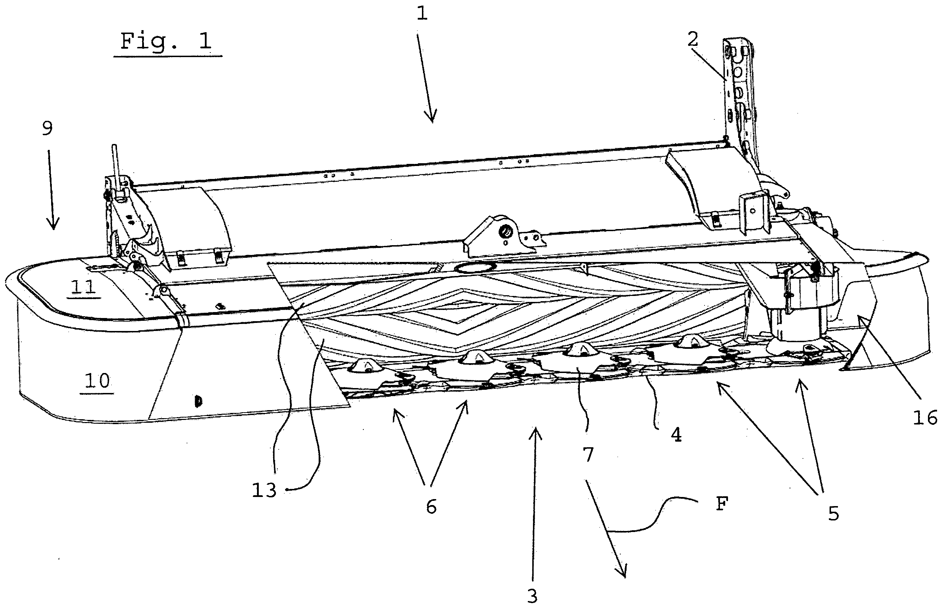

In der Fig. 1 ist eine Mähmaschine 1 zum Mähen von landwirtschaftlichem Halm- oder Blattgut gezeigt, welche über eine Rahmenbaugruppe 2 beispielsweise an eine Dreipunkthubeinrichtung einer landwirtschaftlichen Zug- und Antriebsmaschine oder dgl. Trägerfahrzeug angebaut werden kann. In weiteren Ausführungsformen kann die Mähmaschine 1 über die Rahmenbaugruppe 2 an einem Fahrgestell angebracht sein und damit über die zu bearbeitende Feld- oder Wiesenfläche bewegt werden. Beim Mäheinsatz wird die Mähmaschine in Fahrt- und Arbeitsrichtung F über die Feld- oder Wiesenfläche geführt, wobei ein Teil des Maschinengewichtes sich auf dem Erdboden abstützt, während der weitere Teil des Maschinengewichtes im Rahmen einer geregelten Bodendruckentlastung von der Rahmenbaugruppe 2 bzw. den nachgeschalteten Maschinenkomponenten wie Dreipunkthubeinrichtung oder Fahrgestell aufgenommen wird. Wie weiterhin aus Fig. 1 hervorgeht, umfasst die Mähmaschine 1 eine Mäherbau-gruppe 3, welche sich aus quer zur Fahrt- und Arbeitsrichtung F auf einem Mähholm 4 gelagerten Schneidorganen 5 zusammensetzt. Die Schneidorgane 5 umfassen bodennahe Rotationskörper 6, die die Form eines Mähtellers 7 aufweisen und an ihrer Außenperipherie mit zwei gegenüberliegend angebrachten Schneidmessern 8 bestückt sind. In weiteren Ausführungsformen kann der Erfindung jedoch auch einer Mäherbaugruppe zugrunde gelegt sein, bei der die Schneidorgane als sogenannte Mähtrommeln ausgeführt sind, wobei die Schneidorgane an ihrer dem Erdboden abgewandten Seite an einem Antriebsholm der Rahmenbaugruppe 2 gelagert sind. Aus der Fig. 1 wird des Weiteren deutlich, dass die Mäherbaugruppe 3 von einer Schutz- und Abdeckungsbaugruppe 9 umgeben ist, die hier im Wesentlichen als Schutztuchanordnung 10 und als Schutzhaube 11 ausgebildet ist, wobei Teile eines, eine Aufbereitungseinrichtung 12 mit zwei übereinander angeordneten Bearbeitungswalzen 13 umgebenden Gehäuses in die Schutzhaube 11 mit eingebunden sind. Im Erntebetrieb nehmen die rotierend angetriebenen Bearbeitungswalzen 13 der Aufbereitungseinrichtung 12 das von den Schneidorganen 5 gemähte Halm- oder Blattgut auf, quetschen es und legen es anschließend wieder auf dem Feld- oder Wiesenboden ab. Durch diese Maßnahme wird der Trocknungsprozess wesentlich beschleunigt.

Im Hinblick auf die die Mäherbaugruppe 3 umgebende Schutz- und Abdeckbaugruppe 9 geht aus der Darstellung in Fig. 1 sehr anschaulich hervor, dass die Umgebung der Mäherbaugruppe 3 während des Erntebetriebes in Bezug auf eine Abführung von unerwünschten Luftströmungen einen relativ dicht abgeschotteten Bereich darstellt, so dass ohne geeignete technische Hilfsmittel eine Abführung unerwünschter Luftströmungen kaum möglich ist.

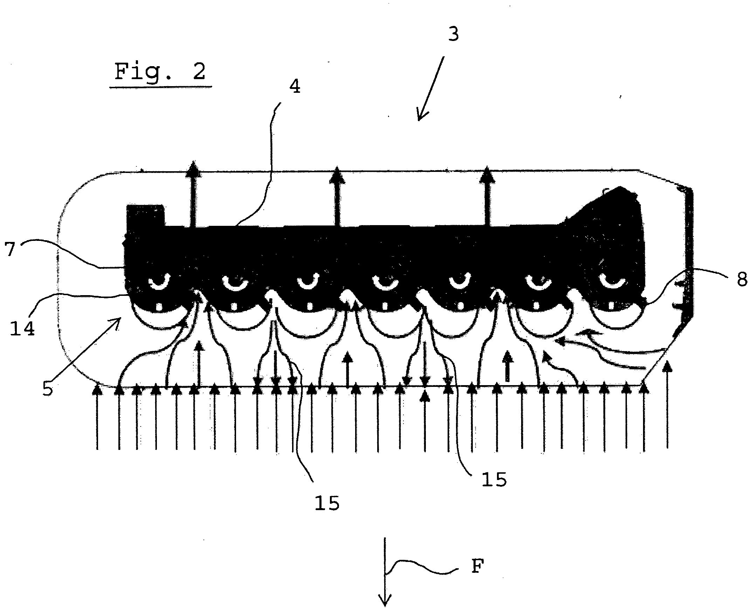

Fig. 2 zeigt eine schematische Ansicht auf eine Mäherbaugruppe 3, bei der oberhalb von einem Mähholm 4 die als Mähteller 7 ausgebildeten Schneidorgane 5 drehbar gelagert sind. Gemäß den Drehrichtungspfeilen 14 rotieren die Mähteller 7 größtenteils in entgegengesetzten Drehrichtungen und erzeugen dabei Luftströmungen, die mit Strömungsanzeigepfeilen 15 gekennzeichnet sind. Überall dort, wo sich zwei benachbarte Mähteller 7 beim Umlauf in Fahrt- und Arbeitsrichtung F bewegen, entsteht eine Luftströmung, die auf das noch abzumähende Halm- oder Blattgut derart einwirkt, dass dieses beim Abmähen umgedrückt wird, so dass dabei dadurch die nicht erwünschte Streifenbildung verursacht wird.

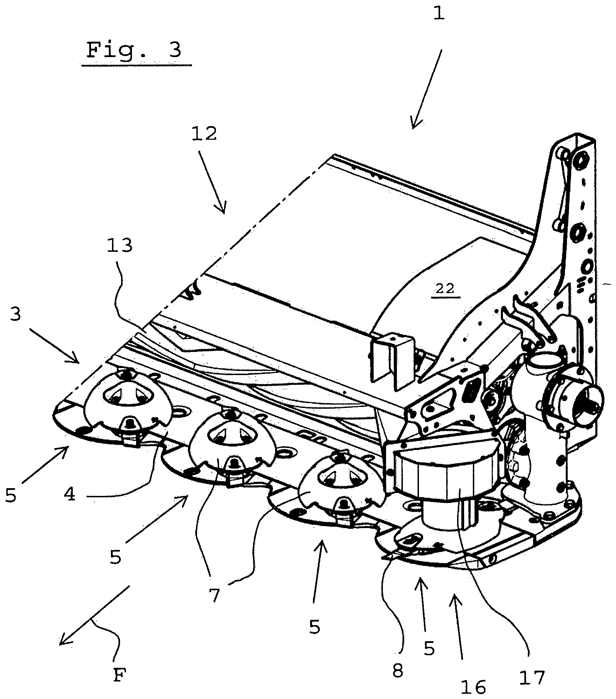

In Fig. 3 wird die Mähmaschine 1 in einer teilweise abgebrochenen Darstellung näher veranschaulicht, wobei aus Gründen einer verbesserten Übersichtlichkeit die Schutztuchanordnung 10 und die Schutzhaube 11 weggelassen wurde. Deutlich zu erkennen ist hier daher, dass der Mäherbaugruppe 3 eine aktive Absaugungseinheit 16 zugeordnet ist. Durch die Absaugung einer hinreichend großen Luftmenge aus dem unterhalb der Schutz- und Abdeckungsbaugruppe 9 gelegenen Umgebungsbereich der Mäherbaugruppe 3 wird erfindungsgemäß dafür Sorge getragen, dass die unerwünschte, in Richtung des noch abzumähenden Halm- oder Blattgutes gerichtete Luftströmung (siehe Pfeil 15 in Fig. 2) in eine Richtung umgelenkt wird, in der diese nicht mehr auf das noch abzumähende Halm- oder Blattgut einwirkt. In einer besonders vorteilhaften Ausführungsform ist die aktive Absaugungseinheit 16 als eine Ventilator- oder Gebläseeinheit 17 mit radialer Strömungsrichtung ausgeführt und saugt an ihrer dem Erdboden zugewandten Seite die hinreichend große Luftmenge ab und führt diese im Anschluss daran in Bereich außerhalb der Schutz- und Abdeckungsbaugruppe 9 ab. Wie es insbesondere aus Fig. 3 hervorgeht, erfolgt die Abführung der aus dem Umgebungsbereich der Mäherbaugruppe 3 abgesaugten Luftmenge hier über einen Luftkanal 22 in einen Bereich hinter der Aufbereitungseinrichtung 12, so dass die abgesaugte Luftmenge hier zur Unterstützung der Ablage des Halm- oder Blattgutes auf der Feld- oder Wiesenfläche dienen kann.

In weiteren vorteilhaften Ausführungsformen kann es vorgesehen sein, der Mäherbaugruppe 3 auch mehrere Ventilator- oder Gebläseeinheiten 17 zu zuordnen. Insbesondere kann es sich als vorteilhaft erweisen, wenn die Mähmaschine 1 an den in Fahrt- und Arbeitsrichtung F linken und rechten Außenseiten mit einer erfindungsgemäßen Ventilator- oder Gebläseeinheit 17 ausgestattet ist.

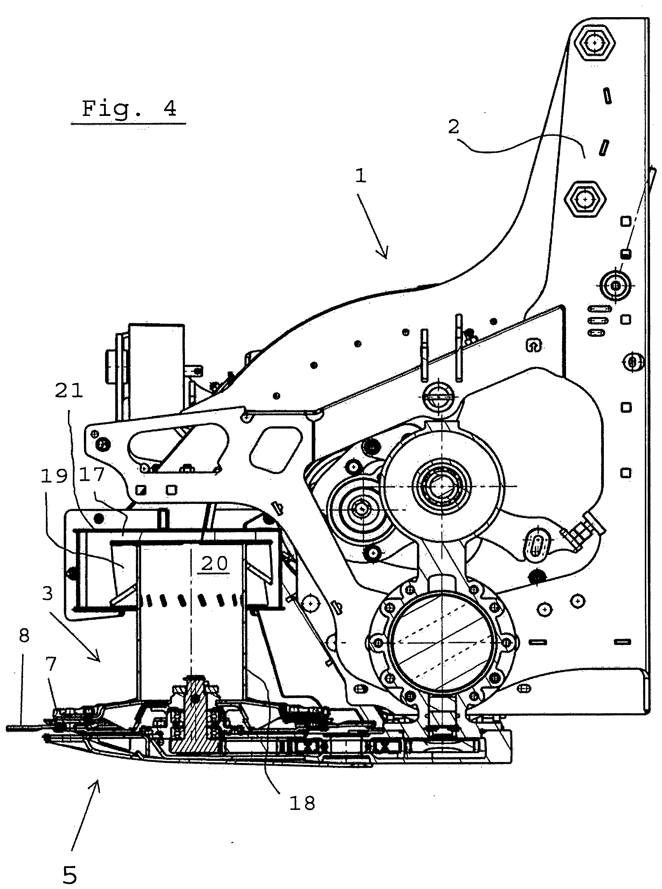

In Fig. 4 ist in einer detaillierteren Darstellung die Gestaltung und Antriebsverbindung einer Ventilator- oder Gebläseeinheit 17 näher veranschaulicht. Ausgehend von dem Mähteller 7 eines Schneidorganes 5 erstreckt sich oberhalb von dem Mähteller 7 eine Förder- und Leittrommel 18, an die sich im oberen Bereich ein mit Förderelementen 19 versehener Ventilator- oder Gebläserotor 20 anschließt, der innerhalb eines Ventilator- oder Gebläsegehäuses 21 umlaufend antreibbar ist. Über den bereits an der Mäherbaugruppe 3 vorhandenen Antrieb für die Schneidorgane 5 wird also die Ventilator- oder Gebläseeinheit 17 mit Antriebsenergie versorgt.

## Patentansprüche

1. Mähmaschine zum Mähen von landwirtschaftlichem Halm- oder Blattgut mit zumindest zwei, um eine in etwa vertikal ausgerichtete Achse umlaufend angetriebenen Schneidorganen (5), die zumindest einen, in der Arbeits- und Betriebsstellung bodennahen, an seiner Außenperipherie mit zumindest zwei Schneidmessern (8) versehenen Rotationskörper (6), dem sich oberhalb davon eine Förder- und Leittrommel (18) für das abgemähte Halm- oder Blattgut anschliesst, aufweisen und in etwa quer zur Fahrt- und Arbeitsrichtung (F) an einer Mäherbaugruppe (3) gelagert sind, wobei die Mäherbaugruppe (3) in der Arbeits- und Betriebsstellung über eine Rahmenbaugruppe (2) auf dem Erdboden abgestützt ist und zumindest teilweise von einer Schutz- und Abdeckungsbaugruppe (9) umgeben ist, wobei der Mäherbaugruppe (3) eine aktive Absaugungseinheit (16) zugeordnet ist, welche dazu eingerichtet ist, eine von der Mäherbaugruppe (3) in Richtung auf das noch stehende Halm- und Blattgut gerichtete Luftströmung umzulenken in eine Richtung, in der das noch stehende Halm- und Blattgut nicht mehr durch die Luftströmung beaufschlagt ist, **dadurch gekennzeichnet, dass** sich oberhalb der Förder- und Leittrommel (18) die als Ventilator- oder Gebläseeinheit mit radialer oder axialer Strömungsrichtung ausgebildete Absaugungseinheit (16) anschließt.

2. Mähmaschine nach Anspruch 1, **dadurch gekennzeichnet, dass** der Mäherbaugruppe (3) eine, zumindest eine Bearbeitungswalze (13) aufweisende Aufbereitungseinrichtung (12) für das landwirtschaftliche Halm- und Blattgut nachgeordnet ist.

3. Mähmaschine nach Anspruch 2, **dadurch gekennzeichnet, dass** die Absaugungseinheit (16) dazu eingerichtet ist, die von der Mäherbaugruppe (3) in Richtung auf das noch stehende Halm- und Blattgut gerichtete, unterhalb der Schutz- und Abdeckungsbaugruppe (9) der Mäherbaugruppe (3) auftretende und durch die umlaufend angetriebenen Rotationskörper (6) der Schneidorgane (5) und/oder durch die Bearbeitungswalze (13) der Aufbereitungseinrichtung (12) verursachte Luftströmung umzulenken.

4. Mähmaschine nach zumindest einem der Ansprüche 1 oder 3, **dadurch gekennzeichnet, dass** die der Mäherbaugruppe (3) zugeordnete aktive Absaugungseinheit (16) dazu eingerichtet ist, die unterhalb der Schutz- und Abdeckungsbaugruppe (9) der Mäherbaugruppe (3) auftretende Luftströmung in einen Bereich außerhalb der Schutz- und Abdeckungsbaugruppe (9) abzuführen.

5. Mähmaschine nach Anspruch 3, **dadurch gekennzeichnet, dass** die der Mäherbaugruppe (3) zugeordnete aktive Absaugungseinheit (16) dazu eingerichtet ist, die unterhalb der Schutz- und Abdeckungsbaugruppe (9) der Mäherbaugruppe (3) auftretende Luftströmung in einen Bereich hinter der Aufbereitungseinrichtung (12) zur Unterstützung der Ablage des landwirtschaftlichen Halm- und Blattgutes abzuführen.

6. Mähmaschine nach zumindest einem der Ansprüche 1 bis 5, **dadurch gekennzeichnet, dass** mehreren Schneidorganen eine Ventilator- oder Gebläseeinheit (17) zugeordnet ist.

7. Mähmaschine nach Anspruch 6, **dadurch gekennzeichnet, dass** die der Mäherbaugruppe (3) zugeordnete aktive Absaugungseinheit (16) als Ventilator- oder Gebläseeinheit (17) mit radialer Strömungsrichtung ausgeführt ist, wobei die von der Ventilator- oder Gebläseeinheit (17) mit radialer Strömungsrichtung benötigte Antriebsenergie von einem der Schneidorgane (5) der Mäherbaugruppe (3) bereit gestellt wird.

8. Mähmaschine nach zumindest einem der Ansprüche 6 bis 7, **dadurch gekennzeichnet, dass** die der Mäherbaugruppe (3) zugeordnete aktive Absaugungseinheit (16) als Ventilator- oder Gebläseeinheit (17) mit radialer Strömungsrichtung aus einem an der Oberseite eines der Schneidorgane (5) der Mäherbaugruppe (3) angebrachten, und mit Förderelementen (19) versehenen Ventilator- oder Gebläserotor (20) und einem Ventilator- oder Gebläsegehäuse (21) gebildet ist, welches an der die Mäherbaugruppe (3) umgebenden Rahmenbaugruppe (2) oder der Schutz- und Abdeckungsbaugruppe (9) gehaltert ist und dabei den Ventilator- oder Gebläserotor (20) übergreift.

9. Mähmaschine nach zumindest einem der Ansprüche 7 bis 8, **dadurch gekennzeichnet, dass** die der Mäherbaugruppe (3) zugeordnete aktive Absaugungseinheit (16) als Ventilator- oder Gebläseeinheit (17) zumindest den beiden äußeren der Schneidorgane (5) der Mäherbaugruppe (3) zugeordnet ist.

10. Mähmaschine nach zumindest einem der Ansprüche 1 bis 5, **dadurch gekennzeichnet, dass** die der Mäherbaugruppe (3) zugeordnete aktive Absaugungseinheit (16) als Ventilator- oder Gebläseeinheit ausgebildet ist, bei der zumindest ein, in seiner Längserstreckung horizontal und quer zur Fahrt- und Arbeitsrichtung sich erstreckender und oberhalb von den Schneidorganen (5) angeordneter Gebläserotor zur Umlenkung der Luftströmung vorgesehen ist, wobei sich der Gebläserotor hinsichtlich seiner Länge über mehrere Schneidorgane (5) erstreckt.

11. Mähmaschine nach zumindest einem der Ansprüche 1 bis 9, **dadurch gekennzeichnet, dass** die der Mäherbaugruppe (3) zugeordnete aktive Absaugungseinheit (16) derartig gestaltet ist, dass große Luftmengen aus dem Bereich unterhalb der Schutz- und Abdeckungsbaugruppe (9) der Mäherbaugruppe (3) abführbar sind.

12. Mähmaschine nach Anspruch 11, **dadurch gekennzeichnet, dass** die der Mäherbaugruppe (3) zugeordnete aktive Absaugungseinheit (16) im Hinblick auf die abführte Luftmenge einstellbar ausgebildet ist.

## Claims

1. Mower for mowing agricultural stalk or leaf material, comprising at least two cutting elements (5) that are driven around an approximately vertically oriented axis and have at least one rotary body (6) that is near the ground in the working and operating position and is provided with at least two cutting blades (8) on the outer periphery thereof, to which rotary body a conveying and guiding drum (18) for the mown stalk or leaf material is attached from above, and which cutting elements are mounted on a mower assembly (3) approximately transversely to the travel and working direction (F), the mower assembly (3), in the working and operating position, being supported on the ground by means of a frame assembly (2) and being at least partially enclosed by a protection and cover assembly (9), an active suction unit (16) being associated with the mower assembly (3) and being designed to divert an air flow that is directed from the mower assembly (3) towards the still-standing stalk and leaf material into a direction in which the still-standing stalk and leaf material is no longer acted upon by the air flow, **characterised in that** the suction unit in the form of a fan or blower unit (16) having a radial or axial flow direction is attached above the conveying and guiding drum (18).

2. Mower according to claim 1, **characterised in that** a processing device (12), having at least one processing roller (13), for agricultural stalk and leaf material is arranged downstream of the mower assembly (3).

3. Mower according to claim 2, **characterised in that** the suction unit (16) is designed to divert the air flow which is directed from the mower assembly (3) towards the still-standing stalk and leaf material, occurs below the protection and cover assembly (9) of the mower assembly (3) and is caused by the rotating bodies (6) of the cutting elements (5) and/or by the processing roller (13) of the processing device (12).

4. Mower according to at least one of claims 1 or 3, **characterised in that** the active suction unit (16) that is associated with the mower assembly (3) is designed to discharge the air flow that occurs below the protection and cover assembly (9) of the mower assembly (3) into a region outside of the protection and cover assembly (9).

5. Mower according to claim 3, **characterised in that** active suction unit (16) that is associated with the mower assembly (3) is designed to discharge the air flow that occurs below the protection and cover assembly (9) of the mower assembly (3) into a region behind the processing device (12) in order to facilitate the deposition of agricultural stalk and leaf material.

6. Mower according to at least one of claims 1 to 5, **characterised in that** a fan or blower unit (17) is associated with a plurality of cutting elements.

7. Mower according to claim 6, **characterised in that** the active suction unit (16) associated with the mower assembly (3) is designed as a fan or blower unit (17) having a radial flow direction, the drive energy required by the fan or blower unit (17) having a radial flow direction being provided by one of the cutting elements (5) of the mower assembly (3).

8. Mower according to at least one of claim 6 or claim 7, **characterised in that** the active suction unit (16) associated with the mower assembly (3) is formed as a fan or blower unit (17) having a radial flow direction from a fan or blower rotor (20) that is fastened to the upper side of one of the cutting elements (5) of the mowing assembly (3) and is provided with conveying elements (19), and a fan or blower housing (21) which is held on the frame assembly (2) that encloses the mower assembly (3) or on the protection and cover assembly (9) and thereby extends over the fan or blower rotor (20).

9. Mower according to at least one of claim 7 or claim 8, **characterised in that** the active suction unit (16) that is associated with the mower assembly (3) and is in the form of a fan or blower unit (17) is associated with at least the two outer cutting elements (5) of the mower assembly (3).

10. Mower according to at least one of claims 1 to 5, **characterised in that** the active suction unit (16) that is associated with the mower assembly (3) is in the form of a fan or blower unit in which at least one blower rotor which extends, in the longitudinal extension thereof, horizontally and transversely to the travel and working direction and is arranged above the cutting elements (5) is provided for deflecting the air flow, the blower rotor extending, with respect to the length thereof, over a plurality of cutting elements (5).

11. Mower according to at least one of claims 1 to 9, **characterised in that** the active suction unit (16) that is associated with the mower assembly (3) is designed such that large amounts of air can be discharged from the region below the protection and cover assembly (9) of the mower assembly (3).

12. Mower according to claim 11, **characterised in that** the active suction unit (16) that is associated with the mower assembly (3) is designed to be adjustable with respect to the amount of air discharged.

## Revendications

1. Faucheuse permettant de faucher des produits agricoles en tiges ou en feuilles comprenant au moins deux organes de coupe (5) entraînés en rotation autour d'un axe orienté essentiellement verticalement qui comportent d'une part au moins un corps rotatif (6) équipé sur sa périphérie externe d'au moins deux lames de coupe (8) qui est situé à proximité du sol dans la position de travail et de fonctionnement, et auquel se connecte au-dessus de celui-ci un tambour de transport et de guidage (18) des produits en tiges ou en feuilles fauchés, et sont d'autre part montés sur un ensemble faucheur (3), s'étendant essentiellement transversalement à la direction de transport et de travail (F), l'ensemble faucheur (3) s'appuyant sur le sol dans la position de travail et de fonctionnement par l'intermédiaire d'un ensemble de châssis (2) et étant entouré au moins partiellement par un ensemble de protection et de recouvrement (9), à l'ensemble faucheur (3) étant associée une unité d'aspiration active (16) réalisée de manière à dévier un flux d'air orienté par l'ensemble faucheur (3) en direction des produits en tiges et en feuilles encore dressés dans une direction dans laquelle les produits en tiges et en feuilles encore dressés ne sont plus sollicités par le flux d'air,
**caractérisée en ce qu'**
au-dessus du tambour de transport et de guidage (18) se connecte l'unité d'aspiration (16) réalisée sous la forme d'une unité de ventilateur ou de soufflante ayant une direction de circulation radiale ou axiale.

2. Faucheuse conforme à la revendication 1,
**caractérisée en ce qu'**
en aval de l'ensemble faucheur (3) est monté un dispositif de traitement (12) des produits agricoles en tiges ou en feuilles comprenant au moins un rouleau de traitement (13).

3. Faucheuse conforme à la revendication 2,
**caractérisée en ce que**
l'unité d'aspiration (16) est réalisé pour dévier le flux d'air orienté par l'ensemble faucheur (3) en direction des produits en tiges ou en feuilles encore dressés, se présentant en dessous de l'ensemble de protection et de recouvrement (9) de l'ensemble faucheur (3) et provoqué par le corps rotatif (6) des organes de coupe (5) entraîné en rotation et/ou par le rouleau de traitement (13) du dispositif de traitement (12).

4. Faucheuse conforme à au moins l'une des revendications 1 et 3,
**caractérisée en ce que**
l'unité d'aspiration active (16) associée à l'ensemble faucheur (3) est réalisée pour transférer le flux d'air se présentant au-dessous de l'ensemble de protection et de recouvrement (9) de l'ensemble faucheur (3) dans une zone située à l'extérieur de l'ensemble de protection et de recouvrement (9).

5. Faucheuse conforme à la revendication 3,
**caractérisée en ce que**
l'unité d'aspiration active (16) associée à l'ensemble faucheur (3) est réalisée pour transférer le flux d'air se présentant au-dessous de l'ensemble de protection et de recouvrement (9) de l'ensemble faucheur (3) dans une zone située à l'arrière du dispositif de traitement (12) pour assister le dépôt des produits agricoles en tiges ou en feuilles.

6. Faucheuse conforme à au moins l'une des revendications 1 à 5,
**caractérisée en ce qu'**
une unité de ventilateur ou de soufflante (17) est associée à plusieurs organes de coupe.

7. Faucheuse conforme à la revendication 6,
**caractérisée en ce que**
l'unité d'aspiration active (16) associée à l'ensemble faucheur (3) est réalisée sous la forme d'une unité de ventilateur ou de soufflante (17) ayant une direction de circulation radiale, l'énergie d'entraînement nécessaire à l'unité de ventilateur ou de soufflante (17) ayant une direction d'écoulement radiale étant fournie par l'un des organes de coupe (5) de l'ensemble faucheur (3).

8. Faucheuse conforme à au moins l'une des revendications 6 et 7,
**caractérisée en ce que**
l'unité d'aspiration active (16) associée à l'ensemble faucheur (3) constituée par une unité de ventilateur ou de soufflante (17) ayant une direction d'écoulement radiale est formée par un rotor de ventilateur ou de soufflante (20) installé sur la face supérieure de l'un des organes de coupe (5) de l'ensemble faucheur (3) et équipé d'éléments de refoulement (19), et par un carter de ventilateur ou de soufflante (21) qui est maintenu sur l'ensemble de châssis (2) entourant l'ensemble faucheur (3) ou sur l'ensemble de protection et de recouvrement (9) et vient ainsi en prise sur le rotor de ventilateur ou de soufflante (20).

9. Faucheuse conforme à au moins l'une des revendications 7 et 8,
**caractérisée en ce que**
l'unité d'aspiration active (16) associée à l'ensemble faucheur (3) constituée par une unité de ventilateur ou de soufflante (17) est associée à au moins les deux organes de coupe (5) externes de l'ensemble faucheur (3).

10. Faucheuse conforme à au moins l'une des revendications 1 à 5,
**caractérisée en ce que**
l'unité d'aspiration active (16) associée à l'ensemble faucheur (3) est réalisée sous la forme d'une unité de ventilateur ou de soufflante, dans laquelle il est prévu au moins un rotor de soufflante permettant de dévier le flux d'air, dont l'extension longitudinale s'étend horizontalement et transversalement à la direction de transport et de travail et qui est positionné au-dessus des organes de coupe (5), la longueur du rotor de soufflante s'étendant sur plusieurs organes de coupe (5).

11. Faucheuse conforme à au moins l'une des revendications 1 à 9,
**caractérisée en ce que**
l'unité d'aspiration active (16) associée à l'ensemble faucheur (3) est agencée de sorte que de grandes quantités d'air puissent être évacuées de la zone située au-dessous de l'ensemble de protection et de recouvrement (9) de l'ensemble faucheur (3).

12. Faucheuse conforme à la revendication 11,
**caractérisée en ce que**
la quantité d'air transférée par l'unité d'aspiration active (16) associée à l'ensemble faucheur (3) peut être réglée.
